# EUROPEAN PATENT SPECIFICATION

(11) **EP 3 695 061 B1**
(45) Date of publication and mention of the grant of the patent: **20.05.2026**
(21) Application number: 18865500.5
(22) Date of filing: 12.10.2018
(51) Int. Cl.: E03D 13/00, F16K 15/14, E03C 1/298, E03C 1/28

(54) **RESILIENT FLUID CONTROL VALVE WITH DRIP EDGE**
ELASTISCHES FLUIDSTEUERVENTIL MIT ABTROPFKANTE
SOUPAPE DE COMMANDE DE FLUIDE ÉLASTIQUE DOTÉE D'UN BORD D'ÉGOUTTAGE

(30) Priority: 12.10.2017 US 201762571707 P
(43) Date of publication of application: 19.08.2020
(73) Proprietor: Falcon Water Technologies, LLC, Los Angeles, CA 90048 (US)
(72) Inventor: GOLDSMITH, Edward Michael, Encino, CA 91316 (US)
(74) Representative: Boult Wade Tennant LLP
(86) International application number: PCT/US2018/055720
(87) International publication number: WO 2019/075407

(56) References cited:
- EP-B1- 2 472 014
- EP-B1- 2 472 014
- WO-A1-2011/062913
- GB-A- 1 444 053
- KR-Y1- 200 290 875
- US-A1- 2008 185 477
- US-A1- 2013 305 441
- US-A1- 2016 201 309
- US-A1- 2016 201 309
- US-B2- 6 719 004

## Description

### BACKGROUND OF THE INVENTION

### (1) Field of Invention

The present invention relates to a fluid control valve and, more particularly, to a fluid control valve having a drip edge for directing fluid away from the sealing body of the valve and/or focusing the fluid flow over a sensor.

### (2) Description of Related Art

Fluid control valves allow liquid to flow in one direction and prevent gaseous flow in the opposite direction. One application for a fluid control valve is in drains which are connected to the sewer system. Here, it is necessary to permit flow through the valve into a sewer system while preventing reverse flow of malodorous gas in the reverse direction. This can be particularly useful in urinals in which the water trap has been removed, or in which regular flushing does not occur with each use as in a urinal application. These applications often have fluid flowing through them in the first direction, which has solids of one form or another suspended within it. Even flushing water can have solids, such as calcium, suspended in it, which can form on any valve surfaces as the liquid evaporates, leading to solids build up. WO 2015/024965 by Geberit International attempts to deal with these solids by creating a serrated drip edge for the valve member.

Further, fluid control valves are often used to replace a liquid water seal, such as a trap found in floor drains or urinals. Examples of valves used as traps include flattened flexible, and preferably resilient, tubes extending from a wide inlet section. These were developed from drain-tube valves used in watercraft. The valves known to the applicant have been described in U.S. Patent No. 6,401,266 (hereinafter referred to as the '266 patent), Netherlands Patent No. NL 1015745C, and U.S. Publication No. 2012/0167295 (hereinafter referred to as the '295 publication).

Valves, such as the valve described in the '295 publication, are generally umbrella-shaped and seal gas by forming a seal between a soft umbrella-shaped membrane and a cartridge wall, which serves as an outer sealing body, while valves like that described in the '266 patent are similar to a duck bill style membrane that seals against themselves. Further valves of this type are known from the documents EP 1174549, JP 49005434B, and JP 5090063 U.

Fluid moving through umbrella valves, such as the one described in the '295 publication, tends to flow faster than fluid flowing through duck bill valves, such as the one disclosed in the '266 patent. This faster flowing type of valve is an advantage when the valves are used in some form of hybrid urinal, which are flushed on occasion and must not overwhelm the valve and cause flushing water to overflow their rim. Valves with a faster rate of fluid flow are also advantageous in floor drains, where flooding is a threat, and codes often call for a minimum rate of flow based on drain size, to assure flooding does not spread to other rooms due to a slow flowing valve at the entrance to the drain. Umbrella style valves, while having the advantage of allowing less restriction to flowing fluid, have the disadvantage of gaining build-up in between the soft membrane and the sealing body, or cartridge body, with use. This build-up is a well-known issue when used in urinals, and causes sticking of the soft membrane of the valve to the tubular cartridge body in the sealing area where they meet. The sticking can also cause poor sealing between the membrane and cartridge body as build-up forms there and create air gaps, which then allow the back migration of gas to flow freely into the room, defeating the desired functionality of the valve. Flushing of these valves with water can help avoid this build-up. There are many known means of flushing valves and sensors. Additionally, when valves are used upstream of a sensing device, where the sensing device operates a flush, as in a urinal, the ability to control where the fluid flows and drips can improve the operation of flush sensor. WO2011062913 relates to a cartridge for regulating fluid flow comprising a valve system and a lighting system. US2008185477 relates to a system for flushing a vacuum toilet in an aircraft comprising a drain connected to a drain conduit, where the vacuum toilet is connectable to a vacuum system by way of a suction valve. GB1444053 relates to a back-flow and odor trap for waste water with a discharge pipe extending downwards with a closure flap mounted on one side of the discharge pipe.

Thus, a continuing need exists for a fluid control valve with the benefits of faster flow, causing build-up to occur away from the sealing body of the valve, and focusing the flow of fluid over the sensor when one is used downstream of the fluid control valve.

### SUMMARY OF INVENTION

The present invention relates to a fluid control valve and, more particularly, to a fluid control valve having a drip edge for directing fluid away from the sealing body of the valve and/or focusing the fluid flow over a sensor. The fluid control valve defined to claim 1 comprises an outer sealing body wall surrounding a sealing area, and a flexible membrane positioned within the sealing area, wherein the flexible membrane creates a seal with the outer sealing body wall within the sealing area. The outer sealing body wall comprises an asymmetrical drip edge, wherein a first end of the asymmetrical drip edge is in a different plane to a second end of the asymmetrical drip edge forming an angled drip edge to direct the fluid away from the outer sealing body wall over a sensor in a controlled manner.

In another aspect, the drip edge extends at an angle away from the sealing area, such that build-up from solids occurs away from the sealing area.

The present invention also relates to a fluid control valve defined in claim 3 comprising an outer sealing body wall surrounding a sealing area, and a flexible membrane positioned within the sealing area, wherein the flexible membrane creates a seal with the outer sealing body wall within the sealing area. The flexible membrane comprises an asymmetrical drip edge formed inboard from the outer sealing body wall wherein a first end of the asymmetrical drip edge is in a different plane to a second end of the asymmetrical drip edge forming an angled drip edge to direct fluid to a narrower and aimed drip area in use.

In another aspect, the drip edge extends at an angle away from the sealing area, such that the fluid flows away from the sealing area.

In another aspect, the sealing area has a center and the fluid control valve further comprises an inner sealing body wall, and at least one portion of the drip edge extends away from the inner sealing body wall towards the center of the sealing area.

In another aspect, the sealing area has a circumference, and the drip edge has a circumference less than the circumference of the sealing area.

The present invention further relates to a urinal system defined in claim 7 comprising a urinal having a bowl and an outlet; a sensor positioned proximate the outlet; and a fluid control valve positioned in the outlet. The fluid control valve comprises an outer sealing body wall surrounding a sealing area, and a flexible membrane positioned within the sealing area. The flexible membrane creates a seal with the outer sealing body wall within the sealing area. The outer sealing body wall comprises an asymmetrical drip edge, wherein a first end of the asymmetrical drip edge is in a different plane to a second end of the asymmetrical drip edge forming an angled drip edge to direct the fluid away from the outer sealing body wall over the sensor.

In another aspect, the sensor is a flushing sensor configured to initiate a flush of the urinal when fluid is sensed.

The present invention further relates to a urinal system defined in claim 9 comprising a urinal having a bowl and an outlet; a sensor positioned proximate the outlet; and a fluid control valve positioned in the outlet. The fluid control valve comprises
an outer sealing body wall surrounding a sealing area, and a flexible membrane positioned within the sealing area. The flexible membrane creates a seal with the outer sealing body wall within the sealing area. The flexible membrane comprises an asymmetrical drip edge formed inboard from the outer sealing body wall, wherein a first end of the asymmetrical drip edge is in a different plane to a second end of the asymmetrical drip edge forming an angled drip edge to direct fluid to a narrower and aimed drip area over the sensor in use.

Additionally, the present invention relates to a method for forming a fluid control valve defined in claim 11, comprising acts of forming a flexible membrane; forming an outer sealing body wall having an asymmetrical drip edge, wherein a first end of the asymmetrical drip edge is in a different plane to a second end of the asymmetrical drip edge forming an angled drip edge shaped to direct fluid away from the outer sealing body wall; positioning the flexible membrane within the outer sealing body wall; and forming a sealing area between the flexible membrane and the outer sealing body wall.

Furthermore, the present invention relates to a method for forming a fluid control valve defined in claim 12, comprising acts of forming an outer sealing body wall; forming a flexible membrane having a drip edge formed inboard from the outer sealing body wall, wherein a first end of the asymmetrical drip edge is in a different plane to a second end of the asymmetrical drip edge forming an angled drip edge to direct fluid to a narrower and aimed drip area in use; positioning the flexible membrane with the outer sealing body wall; and forming a sealing area between the flexible membrane and the outer sealing body wall.

### BRIEF DESCRIPTION OF THE DRAWINGS

The objects, features and advantages of the present invention will be apparent from the following detailed descriptions of the various aspects of the invention in conjunction with reference to the following drawings, where:
FIG. 1 is a side, sectional-view illustration of a fluid control valve and a housing according to prior art;
FIG. 2 is a side, sectional-view illustration of a sensor and a fluid control valve having an asymmetrical drip edge formed in the cartridge wall and a housing according to embodiments of the present disclosure;
FIG. 3 is a side, sectional-view illustration of a sensor and a fluid control valve having an asymmetrical drip edge formed in the valve membrane and a housing according to embodiments of the present disclosure;
FIG. 4A is a side, sectional-view illustration of a fluid control valve with an asymmetrical drip edge formed on the cartridge body, a housing, and an empty drain pipe according to embodiments of the present disclosure;
FIG. 4B is a side, sectional-view illustration of a fluid control valve with an asymmetrical drip edge formed on the cartridge body, a housing, and a drain pipe with slow flowing water according to some embodiments of the present disclosure;
FIG. 5 is a top, perspective-view illustration of a urinal bowl with an odor blocking cartridge according to some embodiments of the present disclosure;
FIG. 6 is a side, sectional-view illustration of a fluid control valve with an asymmetrical drip edge formed on the cartridge body and a housing installed within a urinal bowl according to some embodiments of the present disclosure;
FIG. 7 is a side, sectional-view illustration of a sensor and a fluid control valve having an asymmetrical drip edge formed in the valve membrane and a housing, with cross section AA showing a transition point of membrane geometry at the point that the undercut commences according to embodiments of the present disclosure;
FIG. 8 is a side, sectional-view illustration of a sensor and a fluid control valve having an asymmetrical drip edge formed in the valve membrane and a housing, with arrows showing the flow path of fluid as it passes through the valve and finds the lowest point to drip from according to embodiments of the present disclosure;
FIG. 9 depicts, together with Fig.10, an embodiment which is not comprised within the scope of the claims. Indeed, Fig.9 is a side sectional-view illustration of a sensor and a fluid control valve having a symmetrical drip edge formed in the valve membrane and a housing, with arrows showing the flow path of fluid as it passes through the valve and finds the lowest point to drip from according to an example of the present disclosure, and cross sections AA and BB showing the measuring planes illustrating the smaller circumference of BB than AA; and
FIG. 10 is a side, sectional-view illustration of a fluid control valve having a symmetrical drip edge formed in the valve membrane.

### DETAILED DESCRIPTION

The present invention relates to a fluid control valve and, more particularly, to a fluid control valve having a drip edge for directing fluid away from the sealing body of the valve and/or focusing the fluid flow over a sensor. The following description is presented to enable one of ordinary skill in the art to make and use the invention.

In the following detailed description, numerous specific details are set forth in order to provide a more thorough understanding of the present invention.

Please note, if used, the labels left, right, front, back, top, bottom, forward, reverse, clockwise and counter-clockwise have been used for convenience purposes only and are not intended to imply any particular fixed direction. Instead, they are used to reflect relative locations and/or directions between various portions of an object. As such, as the present invention is changed, the above labels may change their orientation.

### (1) Specific Details

Described is a fluid control valve having a drip edge for directing fluid away from the sealing body/cartridge body and, in some cases, directed over a flush activating sensor in a precise manner, even down to a few drops of fluid. Throughout this disclosure, the terms sealing body and cartridge body as well as the terms sealing body wall and cartridge body wall are used interchangeably but denote the same structural element of the fluid control valve. Specifically, it is an object of the present invention to provide an umbrella style valve with a drip edge that is inboard of the sealing body of the valve, causing build-up of urine precipitates, such as struvite and other biological solids, to occur away from the sealing body. Additionally, it is an object of the invention described herein to direct the flushing water and urine over a urinal sensor which is capable of initiating a flush of the urinal.

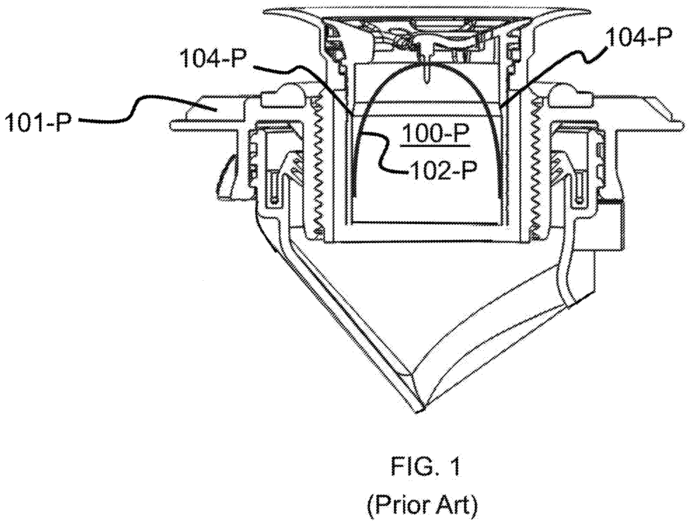

FIG. 1 illustrates a side, sectional-view of a prior art fluid control valve 100-P and a cartridge housing 101-P, such as that described in the '295 publication. As described above, the fluid control valve 100-P seals gas by forming a seal between a soft umbrella-shaped membrane 102-P and an outer sealing body wall 104-P of the cartridge housing 101-P. Umbrella-style valves 100-P, such as the one depicted in FIG. 1, have the disadvantage of permitting build-up in between the soft membrane 102-P and the sealing body wall 104-P with use. This build-up is a well-known issue when the fluid control valve 100-P is used in urinals. Flushing of the fluid control valves 100-P with water can help avoid this build-up, however, even flushing water can have suspended solids that will eventually cause build up on the valve body and valve membrane at the sealing area.

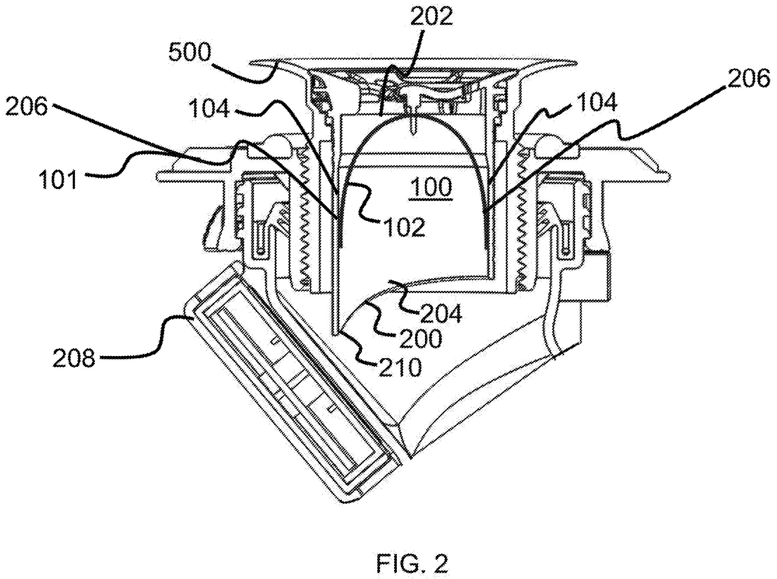

FIG. 2 illustrates a side, sectional-view of a fluid control valve 100 having a drip edge 200 according to embodiments of the present disclosure. In this embodiment, the drip edge 200 is formed as part of the sealing body wall 104. Non-limiting examples of materials that can form the sealing body wall 104 include silicone, thermoplastic elastomer (TPE), thermoplastic starch (TPS), rubbers, or any other resilient material (or materials) that can deform easily and then return to its original shape.

Similar to the prior art fluid control valve 100-P, the fluid control valve 100 of the present invention includes a membrane 102, which creates a seal with an outer sealing body wall 104 of the fluid control valve 100 when it presses against the interior of the outer sealing body wall 104. Much care in design is required to provide a flexible membrane fluid control valve 100 that can press resiliently against the inner wall of the sealing body (element 104), without overpowering incoming fluids under only gravitational force. A housing 101 configured to receive the fluid control valve 100 can be formed in any suitable shape as needed to fit within a drain or other component of a urinal.

In one embodiment, the fluid control valve 100 is made from a suitable plastic body and an elastomeric material membrane 102, such as silicone or Thermoplastic Elastomer (TPE) (or any suitable flexible material). The membrane 102 is a flexible membrane which comprises any suitable material(s) including, but not limited to, silicon, rubber, or other resilient flexible materials, or combinations thereof, which prevent significant damage of the fluid control valve 100 by urine fluids and cleaning solvents. The fluid control valve 100 is used to regulate flow of various fluids, including one or more of water and urine.

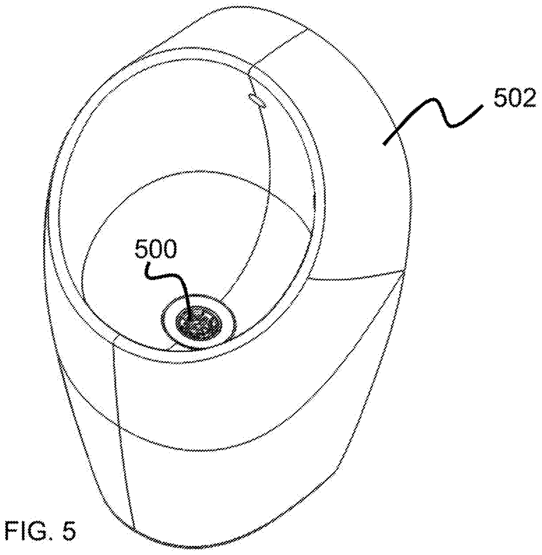

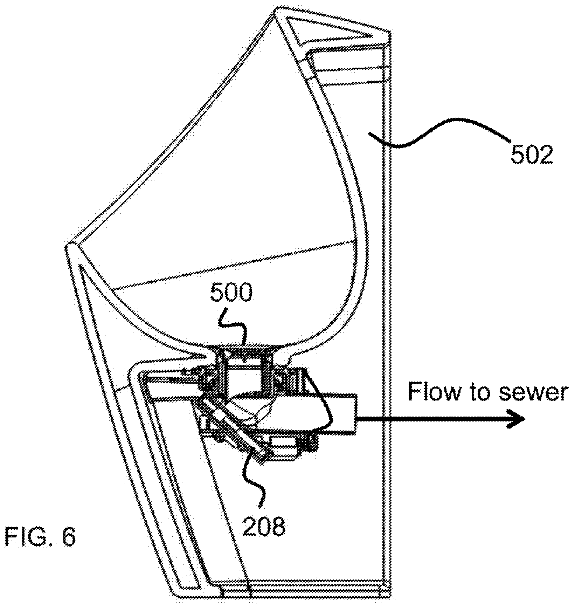

As shown in FIG. 2, the fluid control valve 100 further comprises an inlet 202, an outlet 204, and a sealing area 206 between the inlet 202 (above) and the outlet 204 (below). The sealing area 206 is the area created between the membrane 102 and the outer sealing body wall 104 (also referred to as the outer cartridge wall). In one embodiment, the fluid control valve 100 described herein can be inserted within a urinal outlet 500, such as a drain, of a urinal 502, as shown in FIGs. 5 and 6. The urinal 502 can be intended for both waterless and flushing use. In one embodiment, the urinal outlet 500 is proximate a sensor 208, such as a flushing sensor 208 capable of initiating a flush of the urinal 502. For instance, the sensor 208 can measure and record the flow rate of fluid (e.g., flushing water, urine).
Non-limiting examples of sensors include the sensors manufactured by IPee located at Overwinningstraat 41, B-2610 Wilrijk, Belgium and micas AG located at Turleyring 22, 09376 Oelsnitz/Erzgebirge, Germany. The sensor 208 can be positioned at any location proximate the fluid control valve 100, such as at the urinal outlet 500 (e.g., drain) or any other portion of the urinal 502 provided it is sufficiently close to receive fluid directed by a drip edge 200 of the fluid control valve 100, as will be described in detail below.

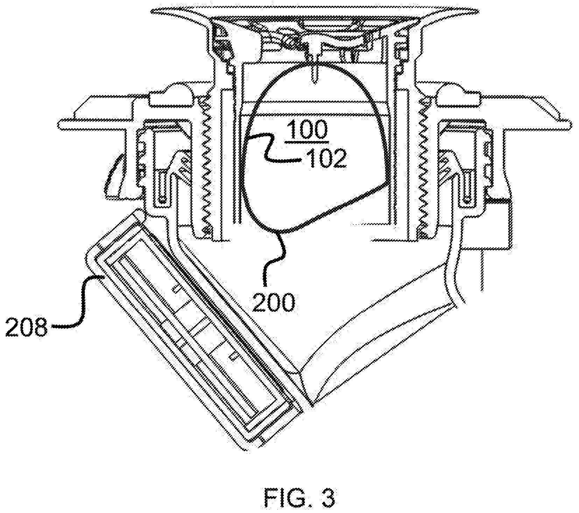

The sensor 208 must have fluid run over its sensing area in order to operate and initiate a flush. By creating a drip edge 200 on the membrane 102 itself (shown in FIG. 3) or sealing body wall 104 (shown in FIG. 2), water and urine are both directed over the sensing area of the sensor 208. For further refinement of the fluid flow path, an asymmetrical drip edge can be utilized on either the sealing membrane 102 or the sealing body wall 104, or both. Additionally, by creating a drip edge 200 inboard of the sealing area 206 (shown in FIGs 3 and 7- 9), any build-up/precipitate that forms will not disturb the function of the sealing area 206 as it will occur at a tip 210 of the drip edge 200 and away from the sealing body wall 104.

While it may seem to one not skilled in the art that a few drops are not so important, in fact they are essential to being able to flush a urinal 502 in a highly efficient manner. With the ability to read both high volume, and small drips, the sensor 208 can direct the urinal 502 to give the fluid control valve 100 just a very small flush if it senses urine in the drops after a full flush. In this manner, the fluid control valve 100 can be kept perfectly clean, elongating its life, while setting the system to flush the minimal amount of water. Without a drip edge 200 targeting these last few drops on the sensor 208, the sensor 208 would not be able to detect urine still remaining on the fluid control valve 100.

By focusing the drops on a sensor 208, such as the one made by Ipee, which can detect the difference between water and urine, the sensor 208 can communicate to the urinal system to have a small additional flush or extended flush time to ensure the fluid control valve 100 is cleaned of all urine. Sensors 208 of this type can operate best when being able to detect only drops of urine, water, and other fluids, so that they can be precisely tuned in their start time, run time, and finish time. Since the sensors 208 are capable of differentiating urine from flushing water, measuring even a few drops at a time can be important for the sensors efficiency in communicating to the urinal 502 when and how much to flush, and when to stop flushing, as well as if the flushing has completely cleaned the urine, down to only a few drops. This is significant as flush valves, such as the fluid control valve 100 described herein, require only a few drops of urine left on them in order that they might stick closed or gain build-up over a short period of time (e.g., few weeks).

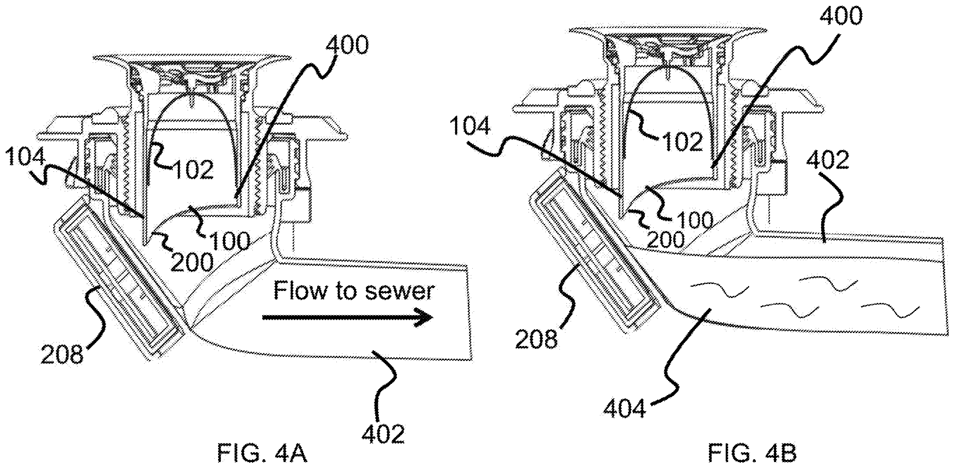

FIG. 4A depicts the fluid control valve 100 described herein and an empty drain pipe 402, while FIG. 4B depicts the fluid control valve 100 and a drain pipe 402 with slow flowing water 404. If there is sitting water 404 in the pipe 402, or the water 404 drains slowly from the pipe 402, the sensor 208 can sense that this is occurring, and thus generate an alert or warning to the maintenance staff that the urinal is flowing slowly, alerting them before it is stopped up and not flowing at all. Thus, slow flow is measured in this fashion.

In use with a urinal 502, urine flows by gravity down the throat, or inlet 202, of the fluid control valve 100 and into the sewer system. The flow of the urine is directed over the sensor 208 area by the drip edge 200 that is configured to aim the fluid (e.g., urine) to the area where the sensor 208 resides, as depicted in FIGs. 2-4B. The inboard positioning of the drip edge 200 carries solids and build-up away from the sealing body wall 104, allowing the sealing area 206 to be self-cleaning.

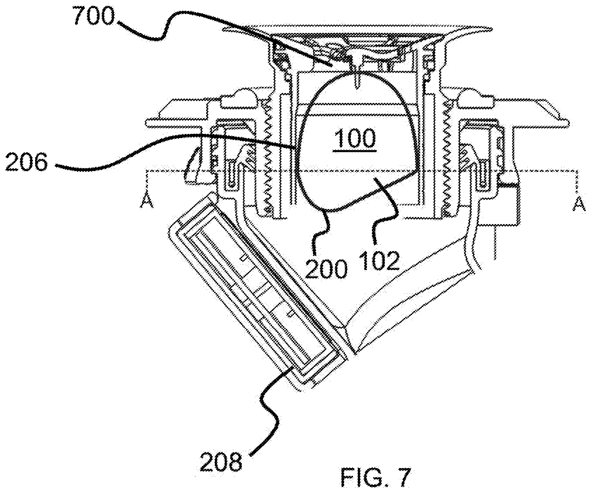

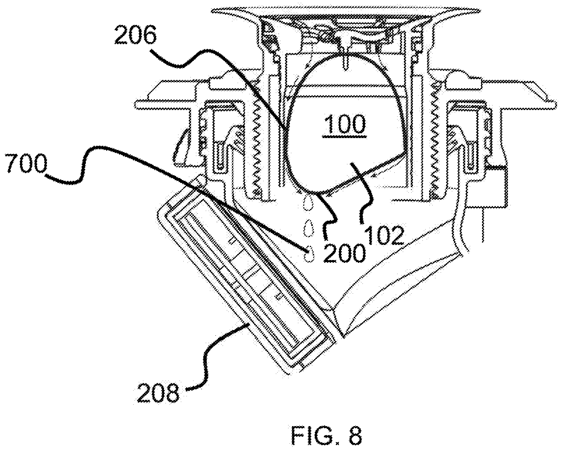

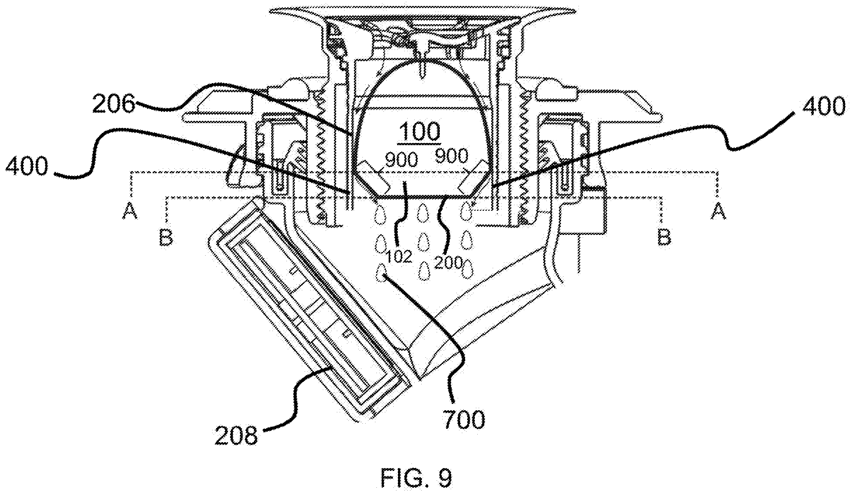

FIG. 7 illustrates the sensor 208 and the fluid control valve 100 having an asymmetrical drip edge 200 formed in the valve membrane 102. As shown, one end of the drip edge 200 is asymmetric (i.e., not in the same plane as) with the other end of the drip edge 200, forming an angled drip edge. Cross section AA shows a transition point of membrane 102 geometry at the point that the undercut commences. FIG. 8 depicts the sensor 208 and the fluid control valve 100 having an asymmetrical drip edge 200 with arrows showing the flow path of fluid as it passes through the fluid control valve 100 to a lowest point. FIG. 9 is an illustration of the sensor 208 and the fluid control valve 100 depicted with a symmetrical drip edge 200 formed in the valve membrane 102, with arrows showing the flow path of fluid as it passes through the valve and finds the lowest point from which to drip. In this embodiment, outer portions 900 of the drip edge 200 are angled towards a center of the sealing area 206 and away from an inner sealing body wall (or inner cartridge wall) 400. In this embodiment, each end of the drip edge 200 is symmetrical (i.e., in the same plane) with the other.

In use, urine will flow through the outer sealing body wall 104 and past the membrane 102, where the two components meet. The gravitational pressure from the fluid is sufficient to deform the membrane 102, allowing the fluid to pass. As the fluid begins to slow and lose velocity and volume of the fluid decreases, the undercut of the membrane 102 below line AA (see FIG. 7) will form an inboard drip edge 200. This will have two effects. First, it will move small fluid drops 700 away from the sealing area 206 (see FIGs. 8 and 9), avoiding build-up of solids in that area. Additionally, the geometry of the drip edge 200 will direct those last fluid drops 700 to a narrower and aimed drip area, where the fluid drops 700 will fall straight down in a reliable and repeatable fashion. Since the drip edge 200 is placed over the sensor's 208 reading area, this will allow the sensor 208 to operate more efficiently.

In use, the sealing area 206 of the fluid control valve 100 can close against a reverse flow of gas from the sewerage system when placed in a drain 500 of a urinal 502 (depicted in FIG. 5). Unlike other prior art umbrella-shaped valves (such as depicted in FIG. 1), the fluid control valve 100 according to embodiments of the present disclosure has a drip edge 200 formed by either the sealing body wall 104 and/or the membrane 102 itself. As can be appreciated by one skilled in the art, both the sealing body wall 104 and the membrane 102 can be formed to have a drip edge 200 designed to aim due to its shape, or one or the other alone can have the aforementioned configuration. The drip edge 200 is formed to aim and direct flushing water, even at very low flows, over the sensor 208 area in the urinal outlet 500.

The geometry of the drip edge 200, whether formed as part of the valve membrane 102 and/or the sealing body wall 104, will cause fluid flow to be directed over the sensor 208 area to cause the urinal 502 to flush. The undercut (or underside) geometry of the membrane 102 of the valve 100, defined by the area below line AA in FIGs. 7 and 9, gives the fluid a path to flow down that is inbound from the inner sealing body wall 400, shown in FIGs. 4A and 4B. This undercut geometry means that rather than the valve 100 terminating at its widest point, as is the norm for umbrella valves used in such devices, the termination point, or lowest point of the valve 100, has a smaller circumference than the sealing area 206 of the valve 100, when measured on parallel planes as in cross-sectional lines A-A and B-B of FIG. 9, creating an under hang for fluid to follow. In another aspect, the sealing area 206 has a circumference, and the drip edge 200 has a circumference less than the circumference of the sealing area 206. The drip edge 200 can then end asymmetrically (as depicted in FIGs. 3, 4A, 4B, 7, and 8) at an angle (similar to a tapering effect), or in a plane which is parallel to the sealing area 206, as shown in FIG. 9.

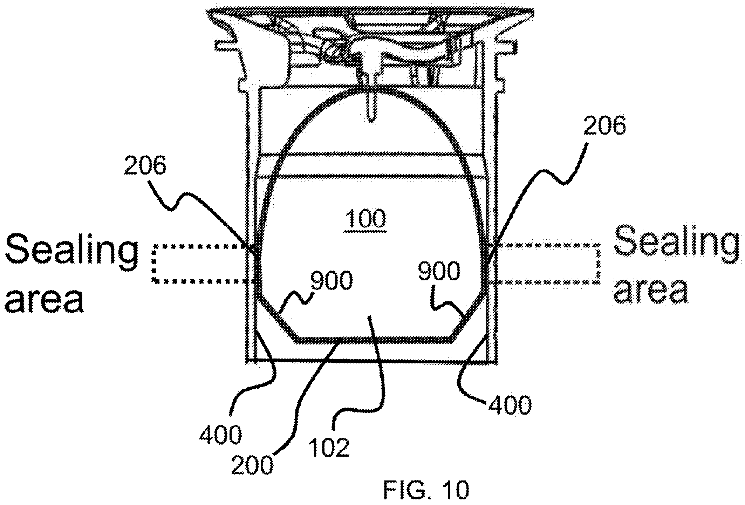

FIG. 10 illustrates a side, sectional-view illustration of the fluid control valve 100 having a symmetrical drip edge 200 formed in the valve membrane 102, depicted without a surrounding housing. FIG. 10 clearly depicts the sealing area 206 as the area created by points of contact between the membrane 102 and the outer sealing body wall 104. Within the valve 100, a circumference of the three-dimensional sealing area 206 is created by all of these points. It follows, then, that the sealing area has a center bounded by the circumference, and as shown in FIG. 10, outer portions 900 of the drip edge 200 are angled towards the center of the sealing area 206 and away from the inner sealing body wall 400.

It is understood by those skilled in the art, that bell- or umbrella-shaped valves 100 of this nature, which count on only gravitational forces to open, must be both low resistance to open, and yet have sufficient spring back action to close even with the weight of residual liquid resting on the valve membrane's 102 surface. It will be further understood by those skilled in the art, that this structure and spring back can be achieved through other means, such as thickening of cross sections of the valve membrane 102, or by adding geometric curves or angles to a single thickness membrane 102. Additionally, the durometer of the membrane 102 can be manipulated to create stiffer or more flexible characteristics without changing geometry or cross-sectional thickness. EP 2859155B1 by Keller uses localized ribs to create a thickened structure, sufficient to keep the valve from collapsing, and to provide areas of stiffness capable of providing spring back to the membrane valve.

One skilled in the art will also understand that the membrane 102 of the valve 100, such as shown in FIGs. 3, 7, 8, and 9 will gain the benefit of additional structure and resilience from the undercut portion below section AA, where the membrane 102 narrows in geometry. One skilled in the art will also understand that the transition angle that occurs at section AA can be manipulated to create more or less resilience depending on the effect desired. For instance, a rounded transition angle at section AA will allow for additional structure and resilience but will be relatively less than a sharp angle at this same section AA.

While the fluid control valve 100 described herein has a particular application in urinals, it can be appreciated by one skilled in the art that it can have other similar applications and the components can be made of varying materials and made more robust to meet such applications without departing from the scope of the invention as defined in the appended claims.

## Claims

1. A fluid control valve (100), comprising:
an outer sealing body wall (104) surrounding a sealing area (206); and
a flexible membrane (102) positioned within the sealing area (206), wherein the flexible membrane (102) creates a seal with the outer sealing body wall (104) within the sealing area (206), and
**characterized in that** the outer sealing body wall (104) comprises an asymmetrical drip edge (200), wherein a first end of the asymmetrical drip edge is in a different plane to a second end of the asymmetrical drip edge forming an angled drip edge arranged to direct the fluid over a sensor in a controlled manner in use.

2. The fluid control valve as set forth in Claim 1, wherein the drip edge (200) extends at an angle away from the sealing area (206), such that the build-up from solids occurs away from the sealing area (206).

3. A fluid control valve (100), comprising:
an outer sealing body wall (104) surrounding a sealing area (206); and
a flexible membrane (102) positioned within the sealing area, wherein the flexible membrane (102) creates a seal with the outer sealing body wall (104) within the sealing area (206), and
**characterized in that** the flexible membrane (102) comprises an asymmetrical drip edge (200) formed inboard from the outer sealing body wall (104) wherein a first end of the asymmetrical drip edge is in a different plane to a second end of the asymmetrical drip edge forming an angled drip edge to direct fluid to a narrower and aimed drip area in use.

4. The fluid control valve as set forth in Claim 3, wherein the drip edge (200) extends at an angle away from the sealing area (206), such that the build-up from solids occurs away from the sealing area.

5. The fluid control valve as set forth in Claim 3, wherein the sealing area (206) has a center, and wherein the fluid control valve (100) further comprises an inner sealing body wall, wherein at least one portion of the drip edge (200) extends away from the inner sealing body wall towards the center of the sealing area.

6. The fluid control valve as set forth in Claim 3, wherein the sealing area (206) has a circumference, and wherein the drip edge (200) has a circumference less than the circumference of the sealing area (206).

7. A urinal system, comprising:
a urinal (502) having a bowl and an outlet (500);
a sensor (208) positioned proximate the outlet; and
a fluid control valve (100) positioned in the outlet, the fluid control valve comprising:
an outer sealing body wall (104) surrounding a sealing area (206); and
a flexible membrane (102) positioned within the sealing area (206), and
wherein the flexible membrane (102) creates a seal with the outer sealing body wall (104) within the sealing area (206),
**characterized in that** the outer sealing body wall (104) comprises an asymmetrical drip edge (200), wherein a first end of the asymmetrical drip edge is in a different plane to a second end of the asymmetrical drip edge forming an angled drip edge to direct the fluid away from the outer sealing body wall over the sensor (208).

8. The urinal system as set forth in Claim 7, wherein the sensor (208)is a flushing sensor configured to initiate a flush of the urinal (502) when fluid is sensed.

9. A urinal system, comprising:
a urinal (502) having a bowl and an outlet (500);
a sensor (208) positioned proximate the outlet; and
a fluid control valve (100) positioned in the outlet, the fluid control valve comprising:
an outer sealing body wall (104) surrounding a sealing area (206); and
a flexible membrane (102) positioned within the sealing area (206), and
wherein the flexible membrane (102) creates a seal with the outer sealing body wall (104) within the sealing area (206),
**characterized in that** the flexible membrane (102) comprises an asymmetrical drip edge (200) formed inboard from the outer sealing body wall (104), wherein a first end of the asymmetrical drip edge (200) is in a different plane to a second end of the asymmetrical drip edge forming an angled drip edge to direct fluid to a narrower and aimed drip area over the sensor (208) in use.

10. The urinal system as set forth in Claim 9, wherein the sensor (208) is a flushing sensor configured to initiate a flush of the urinal (502) when fluid is sensed.

11. A method for forming a fluid control valve (100), comprising acts of:
forming a flexible membrane (102);
forming an outer sealing body wall (104) having an asymmetrical drip edge (200), wherein a first end of the asymmetrical drip edge is in a different plane to a second end of the asymmetrical drip edge forming an angled drip edge shaped to direct fluid away from the outer sealing body wall (104);
positioning the flexible membrane (102) within the outer sealing body wall (104); and
forming a sealing area (206) between the flexible membrane (102) and the outer sealing body wall (104).

12. A method for forming a fluid control valve (100), comprising acts of:
forming an outer sealing body wall (104);
forming a flexible membrane (102) having an asymmetrical drip edge (200) formed inboard from the outer sealing body wall (104) wherein a first end of the asymmetrical drip edge (200) is in a different plane to a second end of the asymmetrical drip edge forming an angled drip edge to direct fluid to a narrower and aimed drip area in use;
positioning the flexible membrane (102) with the outer sealing body wall (104); and
forming a sealing area (206) between the flexible membrane (102) and the outer sealing body wall (104).

## Patentansprüche

1. Fluidsteuerventil (100), umfassend:
eine äußere Dichtungskörperwand (104), die einen Dichtungsbereich (206) umschließt; und
eine flexible Membran (102), die innerhalb des Dichtungsbereichs (206) angeordnet ist, wobei die flexible Membran (102) mit der äußeren Dichtungskörperwand (104) innerhalb des Dichtungsbereichs (206) eine Abdichtung bildet, und
**dadurch gekennzeichnet, dass** die äußere Dichtungskörperwand (104) eine asymmetrische Abtropfkante (200) umfasst, wobei sich ein erstes Ende der asymmetrischen Abtropfkante in einer anderen Ebene befindet als ein zweites Ende der asymmetrischen Abtropfkante, wodurch eine abgewinkelte Abtropfkante entsteht, die so angeordnet ist, dass sie das Fluid im Gebrauch gesteuert über einen Sensor leitet.

2. Fluidsteuerventil nach Anspruch 1, wobei sich die Abtropfkante (200) in einem Winkel von dem Dichtbereich (206) weg erstreckt, sodass die Ansammlung von Feststoffen abseits des Dichtbereichs (206) erfolgt.

3. Fluidsteuerventil (100), umfassend:
eine äußere Dichtungskörperwand (104), die einen Dichtungsbereich (206) umschließt; und
eine flexible Membran (102), die innerhalb des Dichtungsbereichs angeordnet ist, wobei die flexible Membran (102) mit der äußeren Dichtungskörperwand (104) innerhalb des Dichtungsbereichs (206) eine Abdichtung bildet, und
**dadurch gekennzeichnet, dass** die flexible Membran (102) eine asymmetrische Abtropfkante (200) umfasst, die innerhalb der äußeren Dichtungskörperwand (104) ausgebildet ist, wobei sich ein erstes Ende der asymmetrischen Abtropfkante in einer anderen Ebene befindet als ein zweites Ende der asymmetrischen Abtropfkante, wodurch eine abgewinkelte Abtropfkante entsteht, um das Fluid im Gebrauch auf einen engeren und gezielten Abtropfbereich zu lenken.

4. Fluidsteuerventil nach Anspruch 3, wobei sich die Abtropfkante (200) in einem Winkel von dem Dichtungsbereich (206) weg erstreckt, sodass die Ansammlung von Feststoffen abseits des Dichtungsbereichs erfolgt.

5. Fluidsteuerventil nach Anspruch 3, wobei der Dichtungsbereich (206) eine Mitte aufweist und wobei das Fluidsteuerventil (100) ferner eine innere Dichtungskörperwand umfasst, wobei sich mindestens ein Abschnitt der Abtropfkante (200) von der inneren Dichtungskörperwand in Richtung der Mitte des Dichtungsbereichs erstreckt.

6. Fluidsteuerventil nach Anspruch 3, wobei der Dichtungsbereich (206) einen Umfang aufweist und wobei die Abtropfkante (200) einen Umfang aufweist, der kleiner ist als der Umfang des Dichtungsbereichs (206).

7. Urinalsystem, umfassend:
ein Urinal (502) aufweisend ein Becken und einen Auslauf (500);
einen Sensor (208), der in der Nähe des Auslaufs angeordnet ist; und
ein im Auslauf angeordnetes Fluidsteuerventil (100), wobei das Fluidsteuerventil umfasst:
eine äußere Dichtungskörperwand (104), die einen Dichtungsbereich (206) umschließt; und
eine flexible Membran (102), die innerhalb des Dichtungsbereichs (206) angeordnet ist, und
wobei die flexible Membran (102) innerhalb des Dichtungsbereichs (206) eine Abdichtung mit der äußeren Dichtungskörperwand (104) bildet,
**dadurch gekennzeichnet, dass** die äußere Dichtungskörperwand (104) eine asymmetrische Abtropfkante (200) umfasst, wobei sich ein erstes Ende der asymmetrischen Abtropfkante in einer anderen Ebene befindet als ein zweites Ende der asymmetrischen Abtropfkante, wodurch eine abgewinkelte Abtropfkante entsteht, die das Fluid von der äußeren Dichtungskörperwand über den Sensor (208) lenkt.

8. Urinalsystem nach Anspruch 7, wobei der Sensor (208) ein Spülsensor ist, der so konfiguriert ist, dass er eine Spülung des Urinals (502) auslöst, wenn Fluid detektiert wird.

9. Urinalsystem, umfassend:
ein Urinal (502) aufweisend ein Becken und einen Auslauf (500);
einen Sensor (208), der in der Nähe des Auslaufs angeordnet ist; und
ein im Auslauf angeordnetes Fluidsteuerventil (100), wobei das Fluidsteuerventil umfasst:
eine äußere Dichtungskörperwand (104), die einen Dichtungsbereich (206) umschließt; und
eine flexible Membran (102), die innerhalb des Dichtungsbereichs (206) angeordnet ist, und
wobei die flexible Membran (102) innerhalb des Dichtungsbereichs (206) eine Abdichtung mit der äußeren Dichtungskörperwand (104) bildet,
**dadurch gekennzeichnet, dass** die flexible Membran (102) eine asymmetrische Abtropfkante (200) aufweist, die innerhalb der äußeren Dichtungskörperwand (104) ausgebildet ist, wobei sich ein erstes Ende der asymmetrischen Abtropfkante (200) in einer anderen Ebene befindet als ein zweites Ende der asymmetrischen Abtropfkante, wodurch eine abgewinkelte Abtropfkante gebildet wird, um das Fluid im Gebrauch in einen engeren und gezielten Abtropfbereich über dem Sensor (208) zu lenken.

10. Urinalsystem nach Anspruch 9, wobei der Sensor (208) ein Spülsensor ist, der so konfiguriert ist, dass er eine Spülung des Urinals (502) auslöst, wenn Fluid detektiert wird.

11. Verfahren zum Bilden eines Fluidsteuerventils (100), umfassend folgende Schritte:
Bilden einer flexiblen Membran (102);
Bilden einer äußeren Dichtungskörperwand (104) aufweisend eine asymmetrische Abtropfkante (200), wobei sich ein erstes Ende der asymmetrischen Abtropfkante in einer anderen Ebene befindet als ein zweites Ende der asymmetrischen Abtropfkante, wodurch eine abgewinkelte Abtropfkante entsteht, die so geformt ist, dass sie Fluid von der äußeren Dichtungskörperwand (104) wegleitet;
Positionieren der flexiblen Membran (102) innerhalb der äußeren Dichtungskörperwand (104); und
Bilden eines Dichtungsbereichs (206) zwischen der flexiblen Membran (102) und der äußeren Dichtungskörperwand (104).

12. Verfahren zum Bilden eines Fluidsteuerventils (100), umfassend folgende Schritte:
Bilden einer äußeren Dichtungskörperwand (104);
Bilden einer flexiblen Membran (102) aufweisend eine asymmetrische Abtropfkante (200), die innerhalb der äußeren Dichtungskörperwand (104) ausgebildet ist, wobei sich ein erstes Ende der asymmetrischen Abtropfkante (200) in einer anderen Ebene befindet als ein zweites Ende der asymmetrischen Abtropfkante, wodurch eine abgewinkelte Abtropfkante gebildet wird, um das Fluid im Gebrauch auf einen engeren und gezielten Abtropfbereich zu lenken;
Positionieren der flexiblen Membran (102) an der äußeren Dichtungskörperwand (104); und
Bilden eines Dichtungsbereichs (206) zwischen der flexiblen Membran (102) und der äußeren Dichtungskörperwand (104).

## Revendications

1. Vanne de régulation de fluide (100), comprenant :
une paroi extérieure du corps d'étanchéité (104) entourant une zone d'étanchéité (206) ; et
une membrane flexible (102) positionnée dans la zone d'étanchéité (206), dans laquelle la membrane flexible (102) crée un joint avec la paroi extérieure du corps d'étanchéité (104) dans la zone d'étanchéité (206), et
**caractérisée en ce que** la paroi extérieure du corps d'étanchéité (104) comprend un bord d'égouttement asymétrique (200), dans laquelle une première extrémité du bord d'égouttement asymétrique se trouve dans un plan différent d'une seconde extrémité du bord d'égouttement asymétrique, formant un bord d'égouttement incliné disposé de façon à diriger le fluide sur un capteur de manière contrôlée en cours d'utilisation.

2. Vanne de régulation de fluide selon la revendication 1, dans laquelle le bord d'égouttement (200) s'étend selon un angle éloigné de la zone d'étanchéité (206), de sorte que l'accumulation de solides se produise loin de la zone d'étanchéité (206).

3. Vanne de régulation de fluide (100), comprenant :
une paroi extérieure du corps d'étanchéité (104) entourant une zone d'étanchéité (206) ; et
une membrane flexible (102) positionnée dans la zone d'étanchéité, dans laquelle la membrane flexible (102) crée un joint avec la paroi extérieure du corps d'étanchéité (104) dans la zone d'étanchéité (206), et
**caractérisée en ce que** la membrane flexible (102) comprend un bord d'égouttement asymétrique (200) formé à l'intérieur de la paroi extérieure du corps d'étanchéité (104) dans lequel une première extrémité du bord d'égouttement asymétrique est dans un plan différent d'une seconde extrémité du bord d'égouttement asymétrique, formant un bord d'égouttement incliné pour diriger le fluide vers une zone d'égouttement plus étroite et ciblée en cours d'utilisation.

4. Vanne de régulation de fluide selon la revendication 3, dans laquelle le bord d'égouttement (200) s'étend selon un angle éloigné de la zone d'étanchéité (206), de sorte que l'accumulation de solides se produise loin de la zone d'étanchéité.

5. Vanne de régulation de fluide selon la revendication 3, dans laquelle la zone d'étanchéité (206) présente un centre, et dans laquelle la vanne de régulation de fluide (100) comprend en outre une paroi de corps d'étanchéité interne, dans laquelle au moins une partie du bord d'égouttement (200) s'étend de la paroi de corps d'étanchéité interne vers le centre de la zone d'étanchéité.

6. Vanne de régulation de fluide selon la revendication 3, dans laquelle la zone d'étanchéité (206) présente une circonférence, et dans laquelle le bord d'égouttement (200) présente une circonférence inférieure à la circonférence de la zone d'étanchéité (206).

7. Système d'urinoir, comprenant :
un urinoir (502) comportant une cuvette et une sortie (500) ;
un capteur (208) positionné à proximité de la sortie ; et
une vanne de régulation de fluide (100) positionnée dans la sortie, la vanne de régulation de fluide comprenant :
une paroi extérieure du corps d'étanchéité (104) entourant une zone d'étanchéité (206) ; et
une membrane flexible (102) positionnée dans la zone d'étanchéité (206), et
dans lequel la membrane flexible (102) crée un joint avec la paroi extérieure du corps d'étanchéité (104) à l'intérieur de la zone d'étanchéité (206),
**caractérisé en ce que** la paroi extérieure du corps d'étanchéité (104) comprend un bord d'égouttement asymétrique (200), dans lequel une première extrémité du bord d'égouttement asymétrique est dans un plan différent d'une seconde extrémité du bord d'égouttement asymétrique formant un bord d'égouttement incliné pour diriger le fluide loin de la paroi extérieure du corps d'étanchéité au-dessus du capteur (208).

8. Système d'urinoir selon la revendication 7, dans lequel le capteur (208) est un capteur de chasse d'eau configuré pour déclencher une chasse d'eau de l'urinoir (502) lorsque du fluide est détecté.

9. Système d'urinoir, comprenant :
un urinoir (502) comportant une cuvette et une sortie (500) ;
un capteur (208) positionné à proximité de la sortie ; et
une vanne de régulation de fluide (100) positionnée dans la sortie, la vanne de régulation de fluide comprenant :
une paroi extérieure du corps d'étanchéité (104) entourant une zone d'étanchéité (206) ; et
une membrane flexible (102) positionnée dans la zone d'étanchéité (206), et
dans lequel la membrane flexible (102) crée un joint avec la paroi extérieure du corps d'étanchéité (104) à l'intérieur de la zone d'étanchéité (206),
**caractérisé en ce que** la membrane flexible (102) comprend un bord d'égouttement asymétrique (200) formé à l'intérieur de la paroi du corps d'étanchéité extérieur (104), dans lequel une première extrémité du bord d'égouttement asymétrique (200) est dans un plan différent d'une seconde extrémité du bord d'égouttement asymétrique, formant un bord d'égouttement incliné pour diriger le fluide vers une zone d'égouttement plus étroite et ciblée sur le capteur (208) en cours d'utilisation.

10. Système d'urinoir selon la revendication 9, dans lequel le capteur (208) est un capteur de chasse d'eau configuré pour déclencher une chasse d'eau de l'urinoir (502) lorsque du fluide est détecté.

11. Procédé de fabrication d'une vanne de régulation de fluide (100), comprenant les étapes suivantes :
formation d'une membrane flexible (102) ;
formation d'une paroi de corps d'étanchéité extérieure (104) dotée d'un bord d'égouttement asymétrique (200), dans lequel une première extrémité du bord d'égouttement asymétrique est dans un plan différent d'une seconde extrémité du bord d'égouttement asymétrique formant un bord d'égouttement incliné conçu pour diriger le fluide loin de la paroi de corps d'étanchéité extérieure (104) ;
positionnement de la membrane flexible (102) à l'intérieur de la paroi extérieure du corps d'étanchéité (104) ; et
formation d'une zone d'étanchéité (206) entre la membrane flexible (102) et la paroi extérieure du corps d'étanchéité (104).

12. Procédé de fabrication d'une vanne de régulation de fluide (100), comprenant les étapes suivantes :
formation d'une paroi extérieure du corps d'étanchéité (104) ;
formation d'une membrane flexible (102) dotée d'un bord d'égouttement asymétrique (200) formé à l'intérieur de la paroi extérieure du corps d'étanchéité (104) dans laquelle une première extrémité du bord d'égouttement asymétrique (200) est dans un plan différent d'une seconde extrémité du bord d'égouttement asymétrique formant un bord d'égouttement incliné pour diriger le fluide vers une zone d'égouttement plus étroite et ciblée en cours d'utilisation ;
positionnement de la membrane flexible (102) avec la paroi extérieure du corps d'étanchéité (104) ; et
formation d'une zone d'étanchéité (206) entre la membrane flexible (102) et la paroi extérieure du corps d'étanchéité (104).
